# EUROPEAN PATENT SPECIFICATION

(11) **EP 1 541 907 B1**
(45) Date of publication and mention of the grant of the patent: **30.01.2013**
(21) Application number: 03725720.1
(22) Date of filing: 30.04.2003
(51) Int. Cl.: F16J 15/10, F16J 15/12

(54) **GASKET MATERIAL**
DICHTUNGSMATERIAL
PRODUIT D'ETANCHEITE

(30) Priority: 05.07.2002 JP 2002196714; 05.07.2002 JP 2002196827; 05.07.2002 JP 2002196972; 05.07.2002 JP 2002196980
(43) Date of publication of application: 15.06.2005
(73) Proprietor: NIPPON LEAKLESS INDUSTRY Co., Ltd., Minato-ku, Tokyo 105-0004 (JP); HONDA GIKEN KOGYO KABUSHIKI KAISHA, Minato-ku, Tokyo 107-8556 (JP)
(72) Inventor: HAMADA, Yoshiaki, NIPPON LEAKLESS IND. CO., LTD, Saitama-shi, Saitama 336-0931 (JP); AKIYOSHI, Koji, NIPPON LEAKLESS IND. CO., LTD, Saitama-shi, Saitama 363-0931 (JP); MURAKAMI, Yasunori, c/o HONDA GIJUTSU KENKYUSHO, Wako-shi, Saitama 351-0193 (JP); TABATA, Masamune, c/o HONDA GIJUTSU KENKYUSHO, Wako-shi, Saitama 351-0193 (JP)
(74) Representative: Paget, Hugh Charles Edward
(86) International application number: PCT/JP2003/005547
(87) International publication number: WO 2004/005773

(56) References cited:
- GB-A- 2 093 474
- JP-A- 6 323 438
- JP-A- 9 111 048
- JP-A- 10 265 765
- JP-A- 11 050 027
- JP-A- 11 071 575
- JP-U- 61 094 654
- US-A- 4 330 442
- US-A- 4 423 109
- US-A- 4 508 777
- US-A- 5 286 574
- US-A- 5 306 553
- US-A- 5 306 553

## Description

### FIELD OF THE INVENTION

The present invention is related to a gasket material which is used for an engine and a transmission for automotive and the like, and especially to a gasket material is manufactured from a joint seat which is made from an ingredient made by mixing and kneading rubber, reinforced fiber and filler, and pressurized laminating and vulcanizing the ingredient.

### BACKGROUND OF THE INVENTION

Up to now, so-called asbestos joint seat was used as the material of the gasket for the circumference of the engine carried on the vehicles and so on, such joint seat is manufactured by binding asbestos by nitrile rubber and phenol resin, and formed to laminating material.

However, recently, this asbestos joint seat is the subject of legal controls because of its influence of the environment, so that the applicants of this application are studying a joint seat which uses another fiber materials instead of asbestos, and presents the result of such study as a paper "Development of non-asbestos gasket material" which is contained in a proceedings of a lecture meeting published by Society of Automotive Engineers of Japan, Inc. at May, 1992.

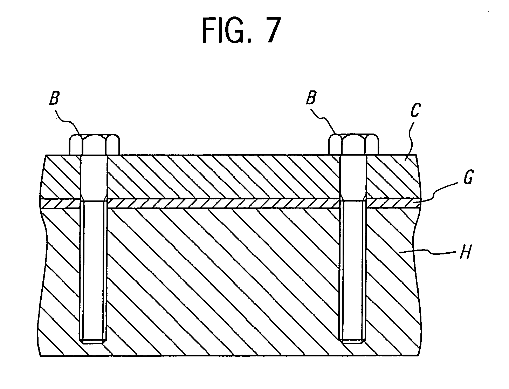

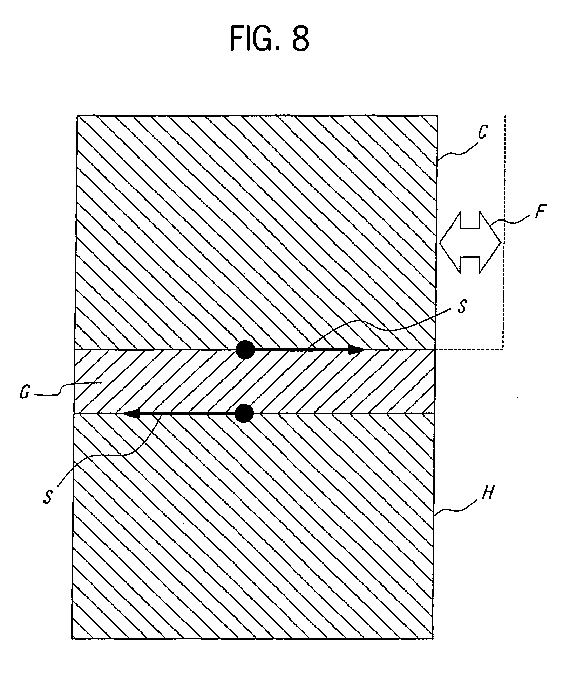

By the way, as shown in Fig. 7, when a gasket is used to a structural body such as a gasket insert portion between a transmission housing H joined with a engine and a cover C connected to the housing H by means of bolt B which the body has a large temperature change by means of a repeating drive and stop of engine and the like, a repeated relative displacement (fretting) is generated between the attaching surfaces of the housing H and the gasket G caused from the repeated temperature change as shown by an arrow in Fig. 8. And there is advanced the low rigidity of the structural body such as housing H and cover C because of the recent weight saving of the automotive, so such fretting is also generated by the external force that is acted on the cover C and the like.

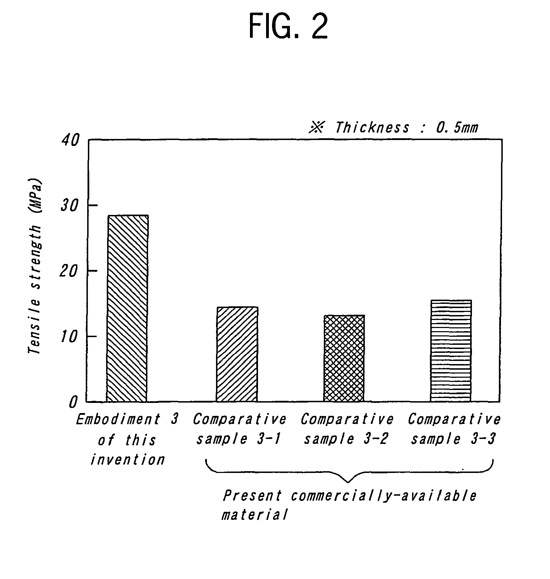

At the same time, the present joint seat that includes the seat with asbestos as an reinforced fiber has a low anti-tensile force, especially, in the generally used joint seat with 0.5mm thickness, there is still not developed the joint seat that has the high anti-tensile force over 40MPa. Therefore, if a gasket that is manufactured from such present joint seat as the material is used at the periphery of engine and the like, the gasket G is misaligned from its original position by the above-mentioned fretting shown by the arrow F in Fig. 2, and in the worst case, there is a problem that the crack and the breakage of the gasket happens and the leakage of the sealing media is generated.

So the applicant tried the solutions to prevent the crack and the breakage of the gasket by lowering the fretting by means of increase the fastening surface pressure via adding the number of the fastening bolt of the structural body or increasing the rigidity of the cover and the like, or provide the mating structure at the attaching surface at the gasket insert portion of the structural body by means of the knock pins.

However, these solutions such as lowering the fretting by means of increase the fastening surface pressure via adding the number of the fastening bolt of the structural body or increasing the rigidity of the cover and the like, or provide the mating structure at the attaching surface at the gasket insert portion of the structural body by the knock pins incurs the cost increase of the structural body due to the complicating of the fastening structure, and the weight increase of the structural body due to the increasing the number of the parts and large sizing of the parts.

Moreover, in the present joint seat, the difference of the sticking force between the front surface and the back surface is small. Thus, if a gasket that is manufactured from such present joint seat as the material is used at the periphery of engine and the like, as shown in Fig. 8, there is a problem that a slip S happens at the both surface of the gasket G relative to the structural body such as the housing H and the cover C due to the above-mentioned fretting F, the gasket G is misaligned from its original position by means of the friction force which is generated when the slip S happens, and the portion P which protrudes from the gasket insert portion is generated, thus, the seal efficiency becomes decrease as shown in Fig. 9 and Fig. 10.

Therefore, the applicant tried the following solutions to prevent the decrease of the sealing effect of the gasket;
1) Lowering the fretting quantity by means of increase the fastening surface pressure via adding the number of the fastening bolt of the structural body or increasing the rigidity of the cover and the like;
2) Improve the bearing force of the gasket against the fretting by increasing the mechanical strength of the gasket;
3) Lowering the fretting quantity by providing the mating structure at the attaching surface at the gasket insert portion of the structural body by the knock pins;
4) Decreasing the force to misalign the position of the gasket by decrease the friction via applying a solid lubricant such as graphite or molybdenum disulfide to the surface of the gasket.

However, these solutions such as lowering the fretting by means of increase the fastening surface pressure via adding the number of the fastening bolt of the structural body or increasing the rigidity of the cover and the like has the problems that incurs the cost increase of the structural body due to the complicating of the fastening structure, and the weight increase of the structural body due to the increasing the number of the parts and large sizing of the parts, and the solution that increasing the mechanical strength of the gasket has a problem that the joint seat and then the gasket becomes hard, thus the compression quantity became decrease, so that the sealing effect becomes worse adversely.

Furthermore, the solution that providing the mating structure at the attaching surface at the gasket insert portion of the structural body by the knock pins has a problem that incurs the cost increase of the structural body due to the complicating of the fastening structure, and the weight increase of the structural body due to the increasing the number of the parts and large sizing of the parts, and the solution that applying a solid lubricant such as a graphite or molybdenum disulfide to the surface of the gasket has a problem that increases the fretting quantity and accelerating the occurrence of deformation of the gasket with low strength due to the slip between the gasket and the cover or the like becomes large by the solid lubricant.

Additionally, as described above, the presently available joint seat that includes the seat with the reinforce fiber of asbestos has low tensile strength (anti-tensile force), so that if a gasket that is manufactured from such present joint seat as the material is used at the periphery of engine and the like, the gasket is misaligned from its original position by the fretting and the leakage of the sealing media occurs due to decrease of the surface pressure.

Therefore, the following the variety of the methods for high strengthening the joint seat is studied, but all of these methods are not sufficient. That is, there is the methods that intend to improve the strength of the gasket by increasing the composition quantity of the reinforce fiber or by increasing the fiber length of the reinforce fiber to increase the monophorogy effect, but these methods has the problems that occurs the runup of the ingredient cost of the gasket and the decrease of the sealing efficiency due to the aggravation of the smoothness of the surface of the gasket.

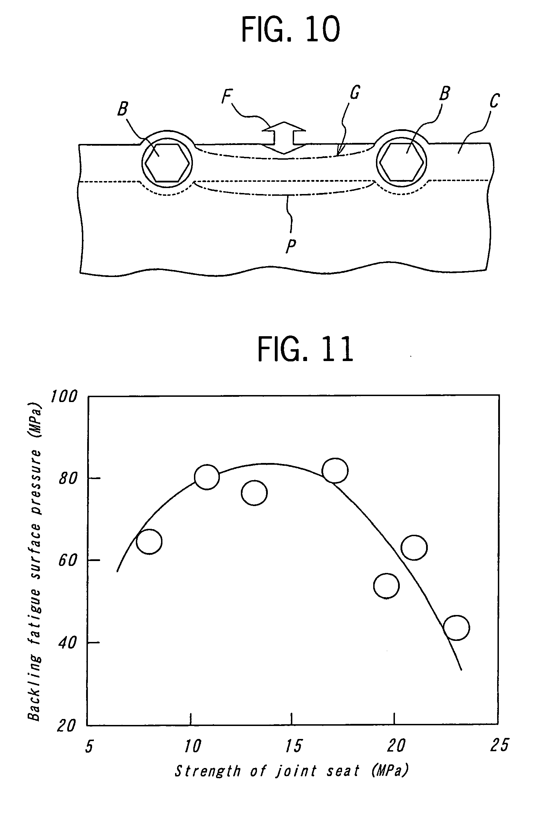

And there are the other methods that intend to increase the density of the gasket and therefore improve the strength of the gasket by enhancing the roll pressure in the forming the laminated joint seat, and to facilitate the curing of the joint seat and therefore improve the strength of the gasket by raising the temperature of the hot roll in the forming of the laminated joint seat and thus increasing the curing temperature of the composed rubber material. However, as shown in Fig. 11, these methods have the problems that when the strength of the joint seat increases to some degree, the hardness of the gasket is too high, so the durability of the gasket which is against the repeated compression stress is decrease, and in the worst case, the buckling fatigue of the gasket occurs, that is, the permanent compression strain of the gasket with side flowage due to the compression breakage, and consequently, it brings the decrease of the sealing efficiency of the gasket as shown in Fig. 11.

Moreover, there are the other methods that intend to increase the strength of the gasket by reducing the composition rate of rubber material at blending of the ingredient of the joint seat thus the joint seat make more hard, or by increase the rate of the acrylic nitrile that is the series of NBR more than 40% at blending of the rubber material in the joint seat. However, these methods also have the problems that the flexibility of the joint seat become decrease, and when the stress that is directed to the thrust is acted on the gasket by fretting under the work of the surface pressure, a large settling, that is, a permanent compression strain that make the thickness decrease occurs and thus the sealing efficiency of the gasket become decrease.

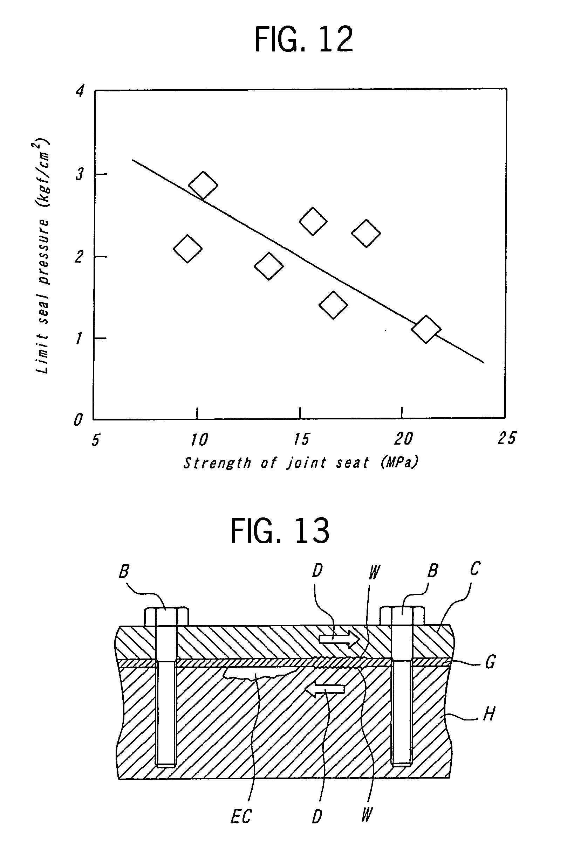

Additionally, for example, as shown in Fig. 13, when a gasket is used to a structural body such as a gasket insert portion between a transmission housing H joined with a engine and a cover C connected to the housing H by means of bolt B which the body has a large temperature change by means of a repeating drive and stop of engine and the like, a relative displacement is generated between the attaching surfaces of the housing H and the gasket G caused from the repeated temperature change as shown by an arrow D. On the other hand, since the gasket that is made from the joint seat as the raw material has a high friction resistance because the rubber composition exists in the surface, this gasket is hard to slip.

Thus, heretofore, when the gasket that is made from the joint seat as the raw material is used at the peripheral of the engine like the transmission, there is a problem that a fretting wear-out portion W occurs on the both surface of the gasket because of the sliding by the above-mentioned relative displacement.

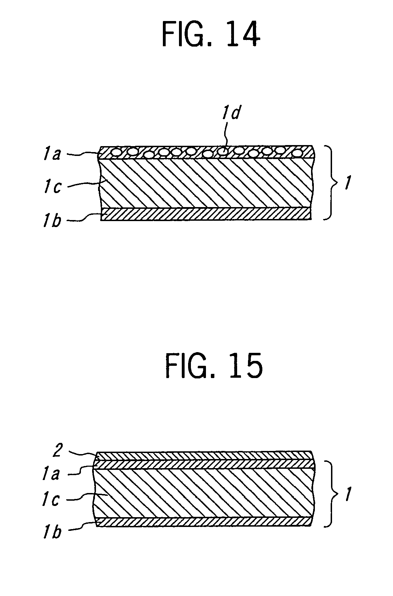

So, to solve such problem of the wear-out of the gasket, the applicant tried the following solutions to decrease the wear-out quantity according to make the surface of the gasket having a low friction; At plate making of the joint seat 1 with triple layer structure that comprises a front surface layer 1a, a back surface layer 1b, and a middle layer that lies between both of the surface layers, a solid lubricant such as fluorocarbon resin, molybdenum disulfide, mica is added into the ingredient of the front surface layer 1a and is dispersed in the ingredient as shown in Fig. 14; Decrease the composition rate of rubber material in joint seat 1 itself; On the front surface layer 1a of the joint seat 1 with triple layer structure that comprises a front surface layer 1a, a back surface layer 1b and a middle layer that lies between both of the surface layers, a solid lubricant such as graphite powder or molybdenum disulfide powder is applied by the splay method or the like as shown in Fig. 15.

However, these solutions still have the following problems, that is, the solution that a solid lubricant such as fluorocarbon resin, molybdenum disulfide, mica is added into the ingredient of the front surface layer 1a and is dispersed in the ingredient is difficult to achieve the decline of the friction coefficient due to the upper limit of the composition of the solid lubricant sufficiently, thus the decrease of the wear-out quantity is not enough; The solution that decreasing the composition rate of rubber material in joint seat 1 itself can not decline the composition of rubber material until it can acquire sufficient friction coefficient due to the constrain of plate making condition; And the solution that a solid lubricant such as graphite powder or molybdenum disulfide powder is applied on the surface layer to make the low friction coating 2 of the solid lubricant has a problem that a electrical corrosion portion EC is generated by the gasket at the gasket insert portion which depend on the material of the housing H and cover C or the kind of the sealing media.

US 5,306,553 relates to an impregnated flat gasket including a fibre mat composed of about 2-20 wt% of a synthetic organic fibre; about 10-70 wt% of a first inorganic filler having a maximum grain size of 0.1 mm and maximum specific surface area 30 m²/g; about 10-70 wt% of a second inorganic filler composed of needle-shaped or globular particles, with a maximum grain size of 0.01 mm and specific surface area from 50 to 350 m²/g; from about 0.5-1 wt% zinc oxide; and about 3-10 wt% of a nitrile butadiene latex. The impregnated fiber mat material can easily be punched into gasket blanks.

US 4,330,442 discloses an asbestos-free gasket forming composition produced by removing water from an aqueous furnish composition comprising phenolic fibres, aromatic polyamide fibres, inorganic or cork filler, a synthetic rubber binder, and a water-insoluble hydroxide.

GB 2,093,474 discloses a high temperature resistant compressible sheet material having a thickness of 0.001 to 1 inch, comprised of at least about 5% by weight of a high temperature organic fibre (e.g. polyaramide) capable of withstanding at least 900 °F; 8-65% by weight of a crosslinkable elastomer; a crosslinking agent for said elastomer; and 15-85% by weight of a particulate filler which has been chemically modified to coreact and bond with the elastomer. The sheet material is useful in the fabrication of gasketing and heat shields, e.g. for automotive applications.

US 4,508,777 relates to a compressed non-asbestos sheet which comprises at least two types of fibers selected from the groups consisting of inorganic fibres other than asbestos and/or organic fibers, natural rubber and/or synthetic rubber, rubber chemicals, and fillers.

US 5,286,574 discloses a composite gasket material including a fibre component (3-15% by wt.), an elastomeric binder component (3-15% by wt.), and a solid filler component (60-90% by wt.) and gaskets made from this composite material.

US 4,423,109 disclose a fibre-reinforced material for use in the manufacture of gaskets which is produced by impregnating a nonwoven fabric with an aqueous dispersion of a rubber and filler. The water is then evaporated out of the impregnated fabric and the final product is formed by curing the rubber under heat and pressure.

### DISCLOSURE OF THE INVENTION

The object of this invention is to provide the gasket material to be solved the above-mentioned problems advantageously. The gasket material of this invention is set out in claim 1.

According to the gasket material of this invention, aramid fiber whose composition is at least 20 wt% and barium sulfate whose composition is 7wt% - 30wt% enhance the strength of the joint seat with maintaining its high flexibility, so that, if the fretting occurs on the structural body such as housing and cover, the occurrence of the crack breakage of the gasket due to the misalignment of the gasket from its original position is prevented.

Furthermore, this gasket material is intended to enhance the strength with neither increase of the compounding ratio of the reinforcing fiber nor increase of the fiber length of the reinforcing fiber, so that it can maintain the ingredient cost of the gasket in low cost and can make the surface of the gasket smooth and make the sealing efficiency increase sufficiently. And this joint seat also intend to enhance the strength with neither increase of the roll pressure at the layer-forming of the joint seat nor increase of the temperature of the hot roll, so that it can keep the low hardness of the joint seat and acquire the endurance of the gasket against the repeated compression stress. Therefore, the decline of the sealing effect of the gasket due to its buckling fatigue can be prevented.

Moreover, this gasket material is intended to enhance the strength with neither decrease of the compounding ratio of the rubber material in the composition of the joint seat nor increase of the rate of the acrylic nitrile component in NBR, so that it can maintain the flexibility of the joint seat in high level, and therefore, the decline of the sealing effect of the gasket due to large wear-out of the gasket can be prevented with resist of the stress of thrust direction by the fretting under the influence of the surface pressure.

Additionally, in the gasket material of this invention, the specific surface area of said aramid fiber is preferably over 6m²/g. If the specific surface area of aramid fiber which indicates the degree of fibril is 6m²/g, the tensile strength and the buckling fatigue surface pressure of the joint seat and thus that of the gasket can be increased sufficiently.

Moreover, in the gasket material of this invention, the mean particle diameter of said barium sulfate is preferably under 3µm. If the barium sulfate powder whose mean particle diameter is 3µm is used, the buckling fatigue surface pressure of the joint seat and thus that of the gasket increases especially.

### BRIEF EXPLANATION OF THE DRAWINGS

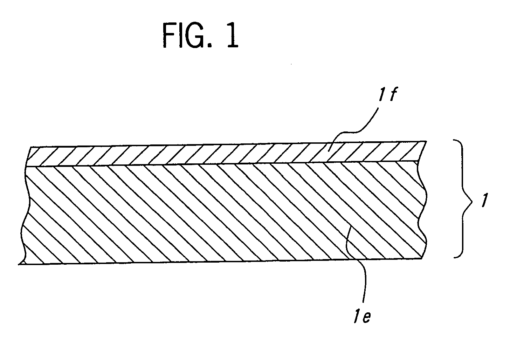

Fig. 1 shows a cross sectional view of a joint seat as an embodiment of the gasket material of this invention.
Fig. 2 shows a diagram of the anti-tensile force of the joint seat as a gasket material of the embodiment in comparison with that of the present commercially available gasket.

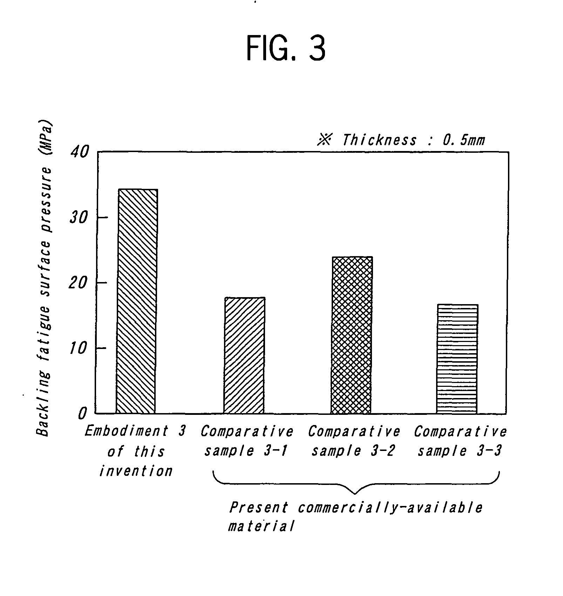

Fig. 3 shows a diagram of the buckling fatigue surface pressure of the joint seat as a gasket material of the embodiment in comparison with that of the present commercially available gasket.

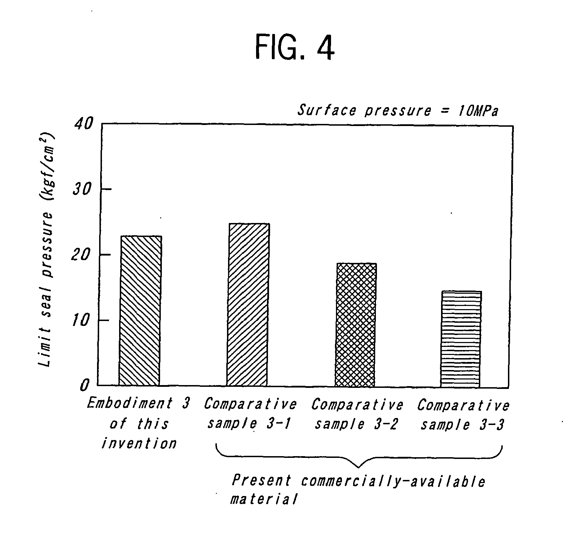

Fig. 4 shows a diagram of the limit seal pressure of the joint seat as a gasket material of the embodiment in comparison with that of the present commercially available gasket.

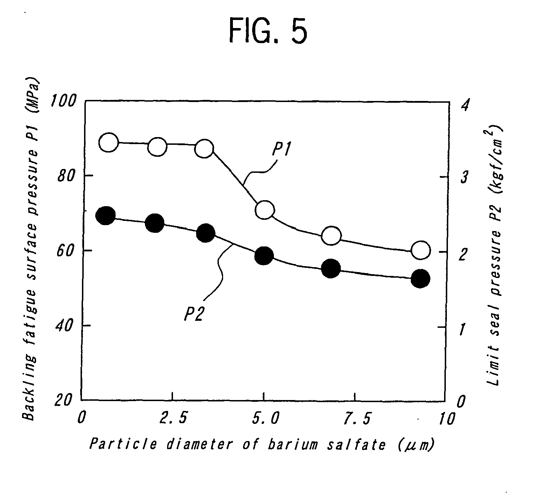

Fig. 5 shows a diagram of the relation of the particle diameter of the barium sulfate that is binding in the ingredient of the joint seat of the embodiment and the buckling fatigue surface pressure and the limit seal pressure of the joint seat.

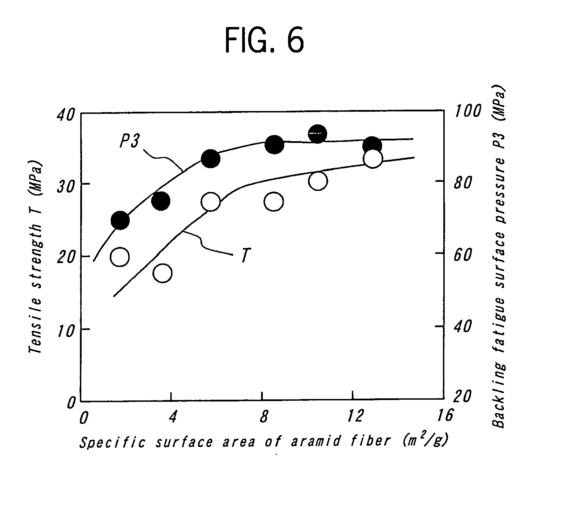

Fig. 6 shows a diagram of the relation of the specific surface area of aramid fiber that is binding in the ingredient of the joint seat of the embodiment and the tensile strength and the buckling fatigue surface pressure of the joint seat.
Fig. 7 shows a cross sectional view of the gasket that is inserted between a housing and a cover of a transmission.
Fig. 8 shows a cross sectional view of the action of the gasket that is made from the present commercially available gasket material against fretting.

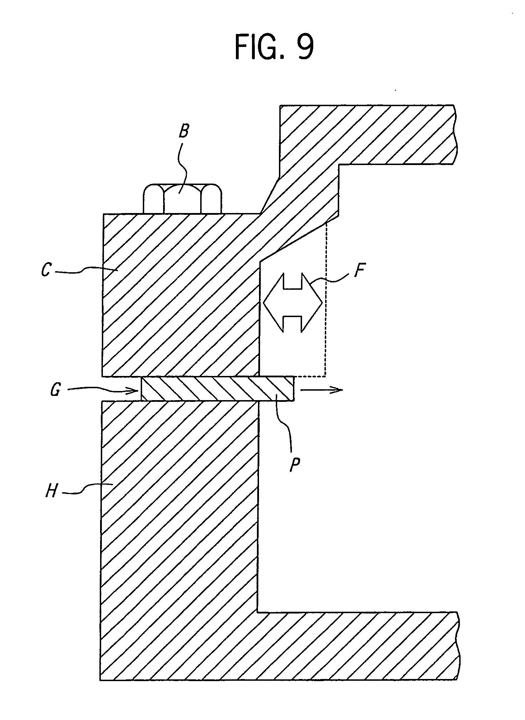

Fig. 9 shows a cross sectional view of the protrusion of the present available gasket due to its displacement.
Fig. 10 shows a plan view of the protrusion of the present available gasket due to its displacement.
Fig. 11 shows a diagram of the relation between the tensile strength and the buckling fatigue surface pressure of the present joint seat.
Fig. 12 shows a diagram of the relation between the tensile strength and the limit seal pressure of the present joint seat.
Fig. 13 shows a cross sectional view of the gasket that is inserted between a housing and a cover of a transmission.
Fig. 14 shows a cross sectional view of an example of the surface of the gasket with low friction coefficient.
Fig. 15 shows a cross sectional view of another example of the surface of the gasket with low friction coefficient.

### THE BEST MODE FOR PRACTICING THE INVENTION

There will be described hereinafter an embodiment according the present invention, with reference to the accompanying drawings.

Fig. 1 shows a cross sectional view of the embodiment of the gasket material of this invention, in which the numeral 1 indicates a joint seat as the gasket material of this embodiment, this joint seat 1 has multi-layer construction which comprises two layers, that is, a main layer 1e that is so-called middle component and a surface layer 1f that is dish component.

This joint seat 1 of the embodiment is formed by following process; at first, a ingredient material is made by mixing rubber such as NBR, reinforced fiber that is composed from a fibrillated (miniaturized) fiber such as aramid fiber, barium sulfate as filler and the other inorganic filler such as clay, then this ingredient material feeds on a hot roll of a calender roll which comprises a pair of rolls, namely, hot roll and cold roll, forming a laminated ingredient on the hot roll by mixing and pressing with the use of these rolls, furthermore forming a joint seat by vulcanizing and curing the ingredient with the use of the heat of the hot roll, hereinafter the joint seat 1 forms by detaching the seat from the hot roll. In this process, as shown in Fig. 1, the above-mentioned the main layer 1e, and the surface layer 1f of the two layers of the joint seat 1 are formed by mainly varying the composing quantity of the reinforced fiber (As for the more detail of this process, please refer the aforementioned paper "Development of non-asbestos gasket material").

In this joint seat 1 of the embodiment, the fundamental component of the ingredient is composed from aramid fiber as the reinforced fiber is at least 20wt%, preferably over 20wt%, NBR (Nitrile-Butadiene-Rubber) as the rubber material is 23wt% - 30wt%, barium sulfate as the filler is 7wt% - 30wt%, and the other inorganic filler is remainder.

In this embodiment, for example, aromatic polyamide fiber (pulp type) is used as said aramid fiber that the specific surface area of this fiber that indicates the degree of fibril is over 6m²/g. If this specific surface area of this aramid fiber is over 6m²/g, as described hereinafter, the tensile strength and the buckling fatigue surface pressure of the joint seat and thus that of the gasket can be increased sufficiently.

And in this embodiment, barium sulfate that has the mean particle diameter under 3µm is used. If the barium sulfate powder which its mean particle diameter is 3µm is used, the buckling fatigue surface pressure of the joint seat and thus that of the gasket increases especially.

According to this joint seat 1 of the embodiment, aramid fiber with over 20 wt% and barium sulfate with 7wt% - 30wt% enhance the strength of the joint seat with maintaining its high flexibility, so that if the fretting occurs on the structural body such as housing and cover, the crack breakage of the gasket which is caused by the displacement of the gasket from its original position can be prevented.

Moreover, this gasket material is intended to enhance the strength with neither increase of the compounding ratio of the reinforcing fiber nor increase of the fiber length of the reinforcing fiber, so that it can maintain the ingredient cost of the gasket in low cost and can make the surface of the gasket smooth and make the sealing efficiency increase sufficiently. And this joint seat also intend to enhance the strength with neither increase of the roll pressure at the layer-forming of the joint seat nor increase of the temperature of the hot roll, so that it can keep the low hardness of the joint seat and acquire the endurance of the gasket against the repeated compression stress. Therefore, the decline of the sealing effect of the gasket due to its buckling fatigue can be prevented.

Moreover, this gasket material is intended to enhance the strength with neither decrease of the compounding ratio of the rubber material in the joint seat nor increase of the rate of the acrylic nitrile component in NBR, so that it can maintain the flexibility of the joint seat in high level, and therefore, the decline of the sealing effect of the gasket due to large wear-out of the gasket can be prevented with resist of the stress of thrust direction by the fretting under the influence of the surface pressure.

Therefore, according to this joint seat 1, when the rigidity of the structural body such as transmission is low and a high bolt fastening force acted on the gasket insert potion between this structural body such as the housing and the cover, if some force acted on the structural body such as the cover and its deformation occurs, the gasket can achieve an excellent sealing durability. That is, when the rigidity of the structural body is low, the surface pressure that is generated at the gasket insert portion beneath the fastening bolt or the vicinity of such bolt is high, but the pressure is low in the span between the bolts. Thus, it is required that the gasket should have a high endurance against buckling and a sealing efficiency. Due to its excellent flexibility, the joint seat 1 of this embodiment can achieve these effects.

Furthermore, in the design of the sealing portion of the structural body by the joint seal 1, the characteristics of this joint seat 1 can enhance the degree of freedom of the pitch and the size of the fastening bolt and the thickness of the cover, thus the weight saving of the structural body can be achieved.

Fig. 2 shows the result of tensile test about the joint seat 1 and the three comparative samples 3-1 to 3-3, the present commercially available joint seats under the condition which is defined in JIS K 6251, and this diagram shows the tensile strength of these joint seats comparing the sample of this embodiment and the comparative samples. As seen from this diagram, the tensile strength of the joint seat 1 of this embodiment (more specifically, approximate mean value of the samples 3-1 to 3-7 described hereinafter) is considerably higher than that of the present commercially available joint seats.

And Fig. 3 shows the result of buckling fatigue test on the joint seat 1 and the three comparative samples 3-1 to 3-3, the present commercially available joint seats, under the condition that each ringshaped samples are set between a pair of plates, and one of the plates was reciprocating slid with the distance of movement 300µm and frequency 1Hz by an actuator with loading a predetermined surface pressure by the hydropress, whether the fluff of the fiber generates or not at reciprocating cycle 3000cycle, and the buckling fatigue surface pressure is determined as the surface pressure when the fluff of the sample is generated, and this diagram shows the buckling fatigue surface pressure of these joint seats comparing the sample of this embodiment and the comparative samples. As seen from this diagram, the buckling fatigue surface pressure of the joint seat 1 (more specifically, approximate mean value of the samples 3-1 to 3-7 describes hereinafter) is considerably higher than that of the present commercially available joint seats.

Moreover, Fig. 4 shows a result of the limit seal pressure test about the joint seat 1 and the three comparative samples 3-1 to 3-3, the present commercially available joint seats under the condition that the nitrogen gas was supplied to inside the sample which the fluff generated via the plates and the soap solution was applied to the periphery of the sample to check the leakage of the nitrogen gas, and the limit seal pressure is measured as the gas pressure when the leakage is generated. As seen from this diagram, the limit seal pressure of the joint seat 1 (more specifically, approximate mean value of the samples 3-1 to 3-7 described hereinafter) is approximately equivalent to the highest value of the limit seal pressure of the present commercially available joint seats.

The following Table 1 shows the result of tensile test, buckling fatigue test and limit seal pressure test for the joint seat samples, where the Samples 3-1 to 3-7 are the joint seat 1. The thickness of all of these samples is 0.5mm, but each of these samples have different composition. The Comparative samples 3-1 to 3-6 are joint seats with thickness of 0.5 mm, and the composition of these comparative samples are according to the joint seat 1 but the composition of aramid fiber or barium sulfate or rubber is outside the scope of the invention. These test, are carried out under the above-mentioned condition. These result shows that the Comparative samples 3-1 to 3-6 has low value of any of tensile strength, buckling fatigue surface pressure and limit seal pressure, but all of the Samples 3-1 to 3-7 have high tensile strength over 25 MPa, and high buckling fatigue surface pressure over 80MPa, and high limit seal pressure over 0.2 MPa (2.0kgf/cm²). It is understood that these samples of the invention are gasket materials with excellent characteristics.

**(Table 1)**

| Examples of composition | Composition (wt%) | | | | Performance of joint seat | | |
|---|---|---|---|---|---|---|---|
| | aramid fiber | barium sulfate | rubber | inorganic filler | tensile strength (MPa) | buckling fatigue surface pressure (MPa) | limit seal pressure (kgf/cm²) * |
| Sample 3-1 | 20 | 7 | 23 | remainder | 26.7 | 88 | 2.4 |
| Sample 3-2 | 20 | 20 | 23 | remainder | 25.3 | 89 | 2.6 |
| Sample 3-3 | 20 | 30 | 23 | remainder | 25.1 | 90 | 2.2 |
| Sample 3-4 | 30 | 20 | 23 | remainder | 28.8 | 86 | 2.2 |
| Sample 3-5 | 40 | 20 | 23 | remainder | 30.7 | 87 | 2.0 |
| Sample 3-6 | 20 | 7 | 27 | remainder | 26.1 | 86 | 2.4 |
| Sample 3-7 | 20 | 7 | 30 | remainder | 25.8 | 84 | 2.6 |
| Comparative sample 3-1 | 20 | 5 | 23 | remainder | 26.2 | 69 | 2.2 |
| Comparative sample 3-2 | 20 | 40 | 23 | remainder | 18.6 | 78 | 2.0 |
| Comparative sample 3-3 | 15 | 20 | 23 | remainder | 17.9 | 73 | 2.8 |
| Comparative sample 3-4 | 20 | 7 | 18 | remainder | 27.1 | 67 | 1.5 |
| Comparative sample 3-5 | 20 | 7 | 20 | remainder | 26.8 | 69 | 1.5 |
| Comparative sample 3-6 | 20 | 7 | 33 | remainder | 18.7 | 61 | 2.6 |

| | | | | | | | |
|---|---|---|---|---|---|---|---|
| *1 kgf/cm² = 0.1 MPa | | | | | | | |

Fig. 5 shows the result of the study of contribution of the particle shape of barium sulfate according to the characteristic of buckling fatigue and of limit seal pressure by the buckling fatigue test and the limit seal pressure test under the similar condition of above-mentioned test, the fundamental composition of the joint seat 1 of the embodiment is that aramid fiber is 20wt%, NBR is 23wt%, barium sulfate is 20wt% and the remainder is inorganic filler, and the particle diameter of barium sulfate differs in each samples. As seen from this diagram, when the particle diameter of barium sulfate becomes over 4µm, the buckling fatigue surface pressure P1 apparently tends to decrease, and the limit seal pressure also tend to decrease as the particle diameter of barium sulfate become large. Thus the barium sulfate is preferably microscopic powder with its diameter is under 3µm. Moreover, the above-mentioned the result that is shown in Fig. 11 and Fig. 12 is obtained from the buckling fatigue test and the limit seal pressure test under the same condition.

Fig. 6 shows the result of the study of contribution of the degree of fibrillation of aramid fiber according to the tensile strength and the characteristic of buckling fatigue by the tensile test and the buckling fatigue test under the similar condition of above-mentioned test, the fundamental composition of the joint seat 1 is that aramid fiber is 20wt%, NBR is 23wt%, barium sulfate is 7wt% and the remainder is inorganic filler, and the specific surface area of aramid fiber differs in each samples. As seen from this diagram, when the specific surface area of the aramid fiber that indicates the degree of fibrillation becomes below 6m²/g, the decrease of the tensile stress occurs, and the characteristic of buckling fatigue tends to decrease in sync with the decrease of the tensile stress. Therefore, the specific surface area of aramid fiber is preferably over 6m²/g.

Furthermore, this invention is not limited by the above-mentioned samples, for example, the joint seat may be multi-layer construction that has three layers, that is, either of a front surface layer and a back surface layer so-called dish component that corresponds to the surface layer 1f and a main middle layer so-called a middle component that corresponds to the main layer 1e. Alternatively, the joint seat may be monolayer structure that has only a middle component that corresponds to the middle layer 1e.

The gasket material of this invention of course can be used as the gasket to the periphery of engine instead of the gasket that is inserted between the housing H and the cover C of the transmission in the above-mentioned embodiment.

Moreover, with the gasket material of this invention, aramid fiber that its composition at least 20 wt% and barium sulfate that its composition is 7wt% - 30wt% enhances the strength of the joint seat with maintaining its high flexibility, so that, if the fretting occurs on the structural body such as housing and cover, the occurrence of the leakage of the sealing media due to the misalignment of the gasket from its original position and decrease of the surface pressure is prevented. And this gasket material can maintain the ingredient cost of the gasket in low cost and can make the surface of the gasket smooth and make the sealing efficiency increase sufficiently. Moreover, this joint seat can keep the low hardness of the joint seat and acquire the endurance of the gasket against the repeated compression stress, therefore, the decline of the sealing effect of the gasket due to its buckling fatigue can be prevented. Additionally, this gasket material can maintain the flexibility of the joint seat in high level and therefore, the decline of the sealing effect of the gasket due to large wear-out of the gasket can be prevented with resist of the stress of thrust direction by the fretting under the influence of the surface pressure.

## Claims

1. A gasket material that is manufactured from a joint seat, which is obtainable by a process of preparing an ingredient by mixing and kneading rubber, reinforcing fiber and filler and pressurized laminating and vulcanizing the ingredient thus prepared,
**characterised in that** the component of the ingredient is composed of the following materials:
at least 20% by weight of aramid fiber as the reinforcing fiber;
23-30% by weight of the rubber;
7-30% by weight of barium sulfate as said filler; and
remainder other inorganic filler.

2. The gasket material according to claim 1,
**characterised in that** the mean particle diameter of said barium sulfate is under 3µm.

3. The gasket material according to claim 1 or 2,
**characterised in that** the specific area of said aramid fiber is over 6m²/g.

## Patentansprüche

1. Dichtungsmaterial, das aus einem Verbindungssitz hergestellt ist, erhältlich durch ein Verfahren zur Herstellung eines Bestandteils durch Vermischen und Kneten von Kautschuk, Verstärkungsfasern und Füllstoff sowie Drucklaminieren und Vulkanisieren des so hergestellten Bestandteils,
**dadurch gekennzeichnet, dass** der Bestandteil aus folgenden Materialien besteht:
zumindest 20 Gew.-% Aramidfasern als Verstärkungsfasern;
23-30 Gew.-% des Kautschuks;
7-30 Gew.-% Bariumsulfat als der Füllstoff; und
einem anderen anorganischen Füllstoff als Rest.

2. Dichtungsmaterial nach Anspruch 1,
**dadurch gekennzeichnet, dass** der mittlere Teilchendurchmesser des Bariumsulfats unter 3 µm beträgt.

3. Dichtungsmaterial nach Anspruch 1 oder 2,
**dadurch gekennzeichnet, dass** die spezifische Oberfläche der Aramidfasern mehr als 6m²/g beträgt.

## Revendications

1. Produit d'étanchéité qui est fabriqué à partir d'un siège de joint, qui peut être obtenu par un procédé consistant à préparer un ingrédient en mélangeant et en pétrissant du caoutchouc, des fibres de renforcement et une matière de remplissage et en stratifiant sous pression et en vulcanisant l'ingrédient ainsi préparé ;
**caractérisé en ce que** le composant de l'ingrédient est composé des matières suivantes :
au moins 20% en poids de fibre d'aramide en tant que fibre de renforcement ;
23-30% en poids de caoutchouc ;
7-30% en poids de sulfate de baryum en tant que dite matière de remplissage ; et
le reste étant une autre matière de remplissage organique.

2. Produit d'étanchéité selon la revendication 1, **caractérisé en ce que** le diamètre particulaire moyen dudit sulfate de baryum est inférieur à 3 µm.

3. Produit d'étanchéité selon la revendication 1 ou 2, **caractérisé en ce que** la surface spécifique de ladite fibre d'aramide est supérieure à 6 m²/g.
